# EUROPEAN PATENT APPLICATION

(11) **EP 1 858 135 A2**
(43) Date of publication of application: **21.11.2007**
(21) Application number: 07009828.0
(22) Date of filing: 16.05.2007
(51) Int. Cl.: H02J 7/16

(54) **Vehicle-mounted power supply system, vehicle-mounted generator, and controller for the generator**

(30) Priority: 17.05.2006 JP 2006137221
(71) Applicant: Hitachi, Ltd., Chiyoda-ku Tokyo 100-8220 (JP)
(72) Inventor: Kanazawa, Hiroshi, Chiyoda-ku Tokyo 100-8220 (JP); Tajima, Fumio, Chiyoda-ku Tokyo 100-8220 (JP); Honbo, Kyoko, Chiyoda-ku Tokyo 100-8220 (JP); Fujino, Shinichi, Chiyoda-ku Tokyo 100-8220 (JP); Saito, Akihiro, Hitachinaka-shi Ibaraki 312-0062 (JP)
(74) Representative: Beetz & Partner

(57) **Abstract**

The present invention provides a power generation controller for a generator that conducts appropriate power generation control of a spirally wound battery.

The power generation controller (150) is constructed so that in order for an output current from the generator (100) to match a set target current, the controller (150) controls power generation of the generator (100) by controlling a field current supplied to a field winding of the generator (100).

## Description

### BACKGROUND OF THE INVENTION

### 1. Field of the Invention

The present invention relates generally to vehicle-mounted power supply systems, vehicle-mounted generators mounted therein, and controllers for the generators. Typically, the invention relates to a technique for controlling a generator when a spirally wound type of lead-acid battery is used as an electrical energy storage device.

### 2. Description of the Related Art

A known conventional technique relating to a spirally wound type of lead-acid battery is disclosed in JP-A-2004-178833, for example. JP-A-2004-178833 describes the technique for constructing an electrode plate group by spirally winding positive electrode plates and negative ones via separators. Also, a known conventional technique relating to controlling a generator adapted to supply electric power to an electrical energy storage device is disclosed in JP-A-05-103432, for example. JP-A-05-103432 describes the technique for controlling a flow of field current through a field winding so as to obtain a battery voltage equal to a target voltage to be generated.

Layer-built lead-acid batteries each having an electrolyte-immersed electrode plate group formed by building positive electrode plates and negative ones in layer form with separators interposed therebetween prevail as electrical energy storage devices for mounting in motor vehicles. To charge a layer-built lead-acid battery, there is a need to avoid reduction in the fluid level of the electrolyte within a layer-built lead-acid battery due to water decomposition, and deterioration of the battery due to corrosion of its electrode materials. Traditionally, therefore, as in the conventional techniques, the generator is controlled according to the particular voltage of the layer-built lead-acid battery in order to prevent the output voltage of the generator from increasing to a charging voltage at which the electrolyte within the battery suffers water decomposition.

Lead-acid batteries of the spirally wound type, based on the conventional techniques, have been developed in recent years. These batteries (hereinafter, referred to simply as spirally wound lead-acid batteries) are significantly improved in charge/discharge characteristics over layer-built lead-acid batteries. Generators, however, are still of the type in which the generation of electric power is controlled according to the particular voltage of the battery, and these generators actually are not of the preferred specifications that utilize the charge/discharge characteristics of the spirally wound lead-acid batteries.

### SUMMARY OF THE INVENTION

In a typical embodiment, the present invention may provide a controller for a vehicle-mounted generator, the controller being adapted to conduct appropriate power generation control of a spirally wound lead-acid battery.

More specifically, the above typical embodiment of the present invention is a controller for a vehicle-mounted generator, the generator being adapted to supply electric power to a spirally wound lead-acid battery; wherein, in order to ensure that a current that is output from the vehicle-mounted generator equals a set target current, the controller may control electric power generation of the generator by controlling a supply action of a field current to a field winding of the generator until a voltage at an output end thereof reaches a target voltage.

The controller monitoring the voltage developed at the output end of the vehicle-mounted generator has a plurality of target voltages. When the highest target voltage of all those which the controller has is taken as a first target voltage, the first target voltage may be set up on the basis of an electrolyte decomposition voltage contained in the lead-acid battery and/or acts as a stopping voltage of the power generation based on the current control.

The spirally wound lead-acid battery is constructed by forming an electrolyte-immersed electrode plate group that includes positive and negative electrode plates, each wound in a spiral fashion with a separator interposed between the positive electrode plate and the negative electrode plate. Each positive electrode plate of the spirally wound lead-acid battery has an area of, for example, 1,500-15,000 cm², and when maximum outline dimensions of the battery are estimated as those of a rectangular parallelepiped, an area per unit volume of the positive electrode plate is, for example, 1,700-17,000 cm²/dm³. As can be seen from these, since the spirally wound lead-acid battery has an electrode area greater than that of the conventional layer-built lead-acid battery, current density per unit area can be reduced and a permissible charging current that may be set on the basis of the electrolyte decomposition voltage can also be larger than a permissible charging current of the layer-built lead-acid battery. In addition, as the current flowing into the battery increases, a charging time of the battery can be shortened. Accordingly, a larger charging current can be supplied to the spirally wound lead-acid battery than that to the layer-built lead-acid battery, so the former of the two types of batteries can be fully charged within a shorter time than the latter. For this reason, in the present invention, field current control based on the current output to the spirally wound lead-acid battery is conducted to control the power generation of the generator which can utilize the above characteristics of the spirally wound lead-acid battery. According to the present invention having the above features, appropriate power generation control can be conducted for the spirally-wound lead-acid battery.

Additionally, according to the present invention, the current that is output from the generator to the spirally wound lead-acid battery can be set to range from 30 to 50 percent of a maximum output current of the generator. The fact that a current of this level can be supplied means that the generator can be operated in a highly efficient range. Efficiency of the generator can therefore be improved in the present invention that employs field current control based on the current output to the spirally wound lead-acid battery. When a charge/discharge coefficient C is used to express a current involving one hour to discharge or charge the battery (this current is called the one-hour rate current), the current described above is equivalent to a current of 1C-2C, which is larger than in the layer-built lead-acid battery whose charging current is less than 1C.

Furthermore, the present invention provides a vehicle-mounted generator having the above controller.

Moreover, the present invention provides a vehicle-mounted power supply system that includes the above-outlined spirally wound lead-acid battery and vehicle-mounted generator.

According to the present invention outlined above, since appropriate power generation control is conducted for the spirally-wound lead-acid battery, performance of a power supply can be improved by utilizing improvements in the charge/discharge characteristics of the spirally wound lead-acid battery. According to the present invention, therefore, even if an electrical load on the power supply is increased by electrical driving of vehicle-mounted auxiliary devices, output improvement thereof, and/or other factors, the increase in the electrical load can be accommodated without enhancing a voltage of the power supply mounted in the vehicle.

According to the present invention, since the appropriate power generation control is conducted for the spirally-wound lead-acid battery, it is also possible to operate the generator in a highly efficient operating range and reduce an electrical load of the vehicle-mounted power supply upon an internal combustion engine which is a driving source of the vehicle. According to the present invention, therefore, it is possible to contribute to fuel consumption reduction of the internal combustion engine and to emissions reduction thereof.

The above mentioned features may be combined in any way, partly or as a whole.

### BRIEF DESCRIPTION OF THE DRAWINGS

Fig. 1 is a block diagram showing a configuration of a vehicle-mounted power supply system according to a first embodiment of the present embodiment;
Fig. 2 is a cross-sectional view showing a configuration of a generator mounted in the vehicle-mounted power supply system of Fig. 1;
Fig. 3 is a diagram that shows efficiency characteristics obtained from a relationship between the number of revolutions and output current of the generator in Fig. 2;
Fig. 4 is a diagram that shows an example of charging mode selection in the vehicle-mounted power supply system of Fig. 1;
Fig. 5 is a flowchart that shows control operation of a power generation controller equipped in the generator of Fig. 2;
Fig. 6 is a partial cross-sectional plan view showing a configuration of a unit cell which forms a spirally wound battery mounted in the vehicle-mounted power supply system of Fig. 1;
Fig. 7 is a perspective view showing an example of an external configuration of the spirally wound battery formed by cylindrically constructing the unit cell of Fig. 6 and storing the unit cell into a rectangular sheathing container;
Fig. 8 is a perspective view showing an example of an external configuration of the spirally wound battery formed by constructing the unit cell of Fig. 6 into rectangular cylinder form and storing the unit cell into a rectangular sheathing container;
Fig. 9 is a perspective view showing an external configuration of the spirally wound battery mounted in the vehicle-mounted power supply system of Fig. 1;
Fig. 10 is a diagram for comparing characteristics of the spirally wound battery of Fig. 9 and characteristics of a layer-built lead-acid battery of Fig. 13, the diagram showing a relationship of a charging level with respect to a charging time;
Fig. 11 is a diagram for comparing the characteristics of the spirally wound battery of Fig. 9 and the characteristics of the layer-built lead-acid battery of Fig. 13, the diagram showing a relationship of a terminal voltage at the first second of charging, with respect to a charging current under a particular charge state;
Fig. 12 is a block diagram showing a configuration of a vehicle-mounted power supply system which is a second embodiment of the present embodiment; and
Fig. 13 is a perspective view showing a configuration of the layer-built lead-acid battery which is a comparative example.

### DETAILED DESCRIPTION OF THE PREFERRED EMBODIMENTS

Embodiments of the present invention will be described hereunder in accordance with the accompanying drawings.

The embodiments described below are based on an example in which a configuration of the present invention is applied to a power supply system mounted in an ordinary automobile which has an internal combustion engine as a driving source of the vehicle. The configuration of the present invention can also be applied to a power supply system mounted in vehicles that each include an engine and a motor which constitutes, in addition to the engine, a driving source of the vehicle or a starting source of the engine (or in some cases, the motor also constitutes an auxiliary driving power source of the engine at the same time). These types of vehicles include, for example, hybrid cars, trucks, buses, other commercial vehicles, garbage-collecting vehicles, and other industrial automobiles. In addition, the configuration of the present invention can be applied to a power supply system mounted in vehicles other than automobiles, and the power supply system including an electrical energy storage device and a generator.

Furthermore, the configuration of the present invention can be applied to a power supply system that includes an electrical energy storage device and a generator, the power supply system being, for example, a private power supply system installed as a consumer appliance at a hospital or the like, or a private power supply system installed for industrial use at a factory, an office building, or the like. The present configuration is particularly suitable for a power supply system having a spirally wound lead-acid battery as an electrical energy storage device.

### [First Embodiment]

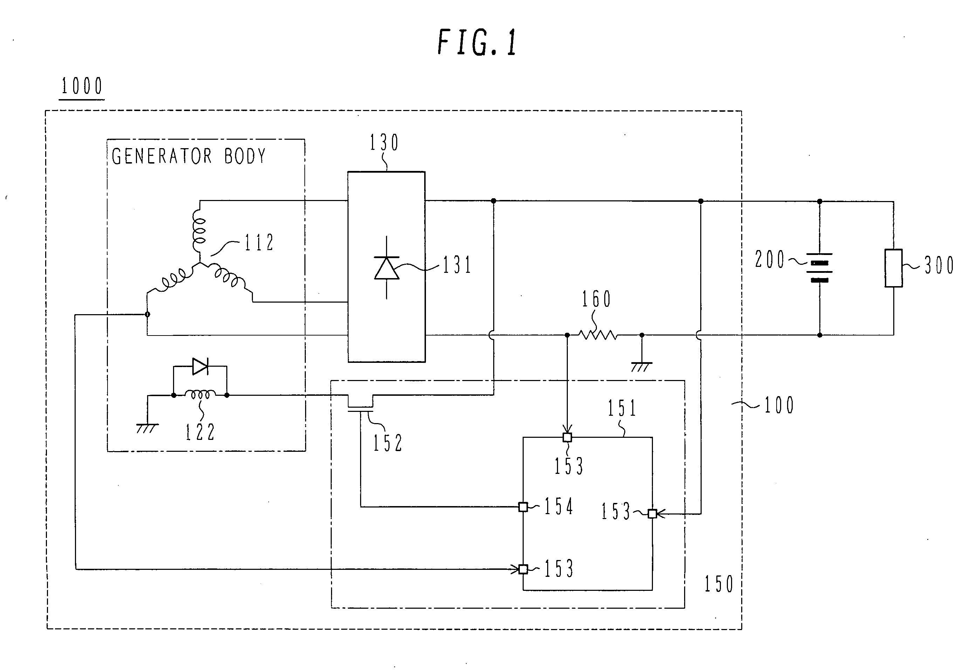

A first embodiment of the present invention will be described with reference to Figs. 1 to 11.

First, a configuration of a vehicle-mounted power supply system 1000 of the present invention is described below with reference to Fig. 1.

As shown in Fig. 1, the vehicle-mounted power supply system 1000 of the present invention includes a vehicle-mounted generator for power supply use (this generator, called "alternator", is hereinafter referred to simply as the generator). The vehicle-mounted power supply system 1000 also includes a spirally wound lead-acid battery (hereinafter, referred to simply as spirally wound battery) that is an electrical energy storage device (secondary battery) electrically connected in parallel to the generator. Reference number 100 in Fig. 1 denotes the generator; and 200, the spirally wound battery.

An electrical load 300 that includes vehicle-mounted electric components, electronics, actuators, and other vehicle-mounted auxiliary devices, is electrically connected in parallel to the generator 100 and the spirally wound battery 200. Direct-current (DC) power is thus supplied as consumable operating power from the generator 100 and the spirally wound battery 200 to the electrical load 300.

The vehicle-mounted electric components include an internal-combustion engine starting motor, lights, a radio, a car navigation device, an engine ignition device, an electric heater for defrosting windshields, and so on. Also, the electronics includes, for example, a control unit that controls operation of the engine and/or other vehicle components such as a transmission. Additionally, the actuators include, for example, a power-steering device, a power-braking device, a motor for operating a throttle valve (or the like) that adjusts the amount of air supplied to the engine, and an electromagnetic mechanism including an injection valve which adjusts the amount of fuel supplied to the engine.

The generator 100 is constituted by: a generator body including a stator coil assembly 112 and a field winding 122; a rectifier 130 electrically connected to the stator coil assembly 112 and constructed so that alternating-current (AC) power that has occurred in the stator coil assembly 112 is rectified into DC power; a power generation controller 150 that controls power generation of the generator body by controlling a field current supplied to the field winding 122; and a current detector 160 for detecting an output current of the rectifier 130.

If the generator body does not output power, a discharge current of the spirally wound battery 200 is supplied as the field current to the field winding 122. If the generator body outputs power, the output current of the rectifier 130 is supplied as the field current to the field winding 122.

The generator body is constructed so that it generates magnetic fluxes by supplying the field current to the field winding 122, interlinks the generated fluxes to the stator coil assembly 112, and induces a voltage therein to generate AC power.

The rectifier 130 forms a diode bridge circuit. Three series circuits each with two diodes 131 electrically connected in series are electrically connected in parallel to one another to form the diode bridge circuit.

The power generation controller 150 includes a switching element 152 (field effect transistor) that controls the field current supplied to the field winding 122, and an electronic circuit 151 that creates a control signal to control a driving action of the switching element 152 and outputs the control signal from the electronic circuit 151 to a gate electrode of the switching element 152.

In order to output the control signal for controlling the driving of the switching element 152, the electronic circuit 151 first receives voltage information on an output positive-polarity end of the rectifier 130, output information on the current detector 160 provided at an output negative-polarity end of the rectifier 130, and voltage information on a phase winding of one phase of the stator coil assembly 112. After that, the electronic circuit 151 uses the above-received information to detect a voltage that is output from the rectifier 130 (i.e., a terminal voltage of the spirally wound battery 200), and a speed (the number of revolutions) of the generator body.

The current detector 160 includes a shunt resistor. A current sensor based on a semiconductor, or any other current sensor constructed using a magnetic sensor (Hall element), for example, may be used as the current detector 160.

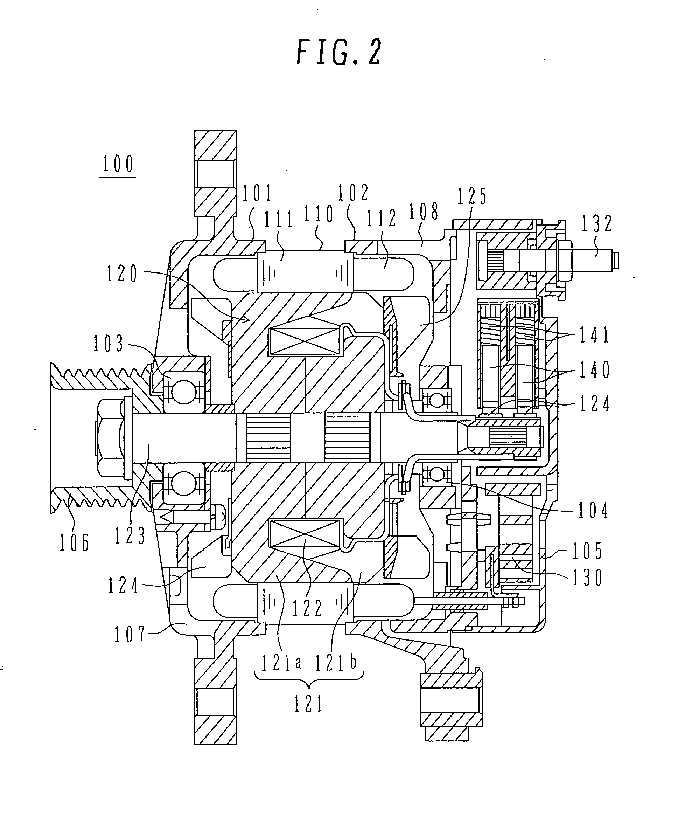

Next, an actual configuration of the generator 100 in the present embodiment is described below using Fig. 2.

The generator body is constructed such that a stator 110 is fixed internally to two brackets constituting a housing, that is, a front bracket 101 and a rear bracket 102, and such that a rotor 120 is rotatably disposed at an inner peripheral side of the stator 110 so as to be opposed thereto via a spatial gap.

The stator 110 has a stator core 111 that forms a magnetic path, and a stator coil assembly 112 mounted on the stator core 111.

The stator core 111 is a cylindrical, layer-built core formed by building in layer form a plurality of magnetic cores each made of a thin-plate-like material such as a silicon steel plate, and is sandwiched from both axial sides between the front bracket 101 and the rear bracket 102. The stator core 111 has a plurality of slots (not shown) in its inner peripheral section.

The stator coil assembly 112 is constituted by three star(Y)-connected or delta(Δ)-connected phase windings. The phase windings are each formed up of a plurality of windings or segments stored within two slots of the stator core 111 in such a form as to straddle several other slots so that both ends of the phase winding protrude outward from both ends of the stator core 111 in an axial direction thereof. Each phase winding is electrically connected to a midpoint on the series circuit of the associated phase of the diode bridge circuit in the rectifier 130.

The rotor 120 is a Rundell-type rotor, having a rotating shaft 123 disposed over a central axis of the rotor. The rotating shaft 123 has a front end rotatably and axially supported by a bearing 103 provided centrally at the front bracket 101. A rear end of the rotating shaft 123 is rotatably and axially supported by a bearing 104 provided centrally at the rear bracket 102. A rotor core 121 is engaged with an opposed section of the rotating shaft 123 with respect to an inner peripheral side of the stator core 111.

The rotor core 121 is provided so that claw-shaped magnetic pole cores 121a and 121b that form a pair are opposed to each other in an axial direction of the rotor core. The claw-shaped magnetic pole cores 121a and 121b each have a plurality of claw-shaped magnetic pole pieces. The claw-shaped magnetic pole pieces are each a front end portion of the claw-shaped magnetic pole core 121a, 121b, extending from a cylindrical section of the magnetic pole core towards a radial centrifugal side thereof, and bent at right angles in an opposition direction of the claw-shaped magnetic pole cores 121a, 121b. In terms of cross-sectional shape, each claw-shaped magnetic pole piece is approximately triangular in its circumferential direction and triangular or trapezoidal in its radial direction.

Each claw-shaped magnetic pole piece of the claw-shaped magnetic pole core 121a, 121b, is disposed with a required spacing in a rotational direction. When the claw-shaped magnetic pole cores 121a, 121b are provided to be opposed to each other in the axial direction of the rotor core 121, the claw-shaped magnetic pole pieces of one magnetic pole core are arranged between those of the other magnetic pole core, so the claw-shaped magnetic pole pieces of one magnetic pole core and those of the other magnetic pole core are arranged at alternate positions in the circumferential direction of the magnetic pole pieces. The claw-shaped magnetic pole core 121a forms either an N-pole or an S-pole. The claw-shaped magnetic pole core 121b forms the other pole. Since the claw-shaped magnetic pole cores 121a, 121b are provided at an upper section of the rotating shaft 123 in an axially opposed fashion, the rotor 120 forms a plurality of magnetic poles so that polarity alternates in a rotational direction of the rotor, that is, so that the polarity alternates between the N-pole and the S-pole.

The cylindrical section of the claw-shaped magnetic pole core 121a, 121b that faces the inner peripheral side of each claw-shaped magnetic pole piece has a bobbin on an outer surface of the cylindrical section. The field winding 122 is wound around the bobbin through a plurality of turns annularly in a circumferential direction of the bobbin.

A front fan 124 is installed on a lateral face of the claw-shaped magnetic pole core 121a, the lateral face being close to the front bracket 101. A rear fan 125 is installed on a lateral face of the claw-shaped magnetic pole core 121b, this lateral face being close to the rear bracket 102. The front fan 124 and the rear fan 125 are constructed to rotate with a rotation of the rotor 120, introduce outside air as a coolant from generator exterior into generator interior, circulate the outside air through the generator interior, and after the outside air has been used for cooling, discharge the outside air from the generator interior to the generator exterior. For this reason, the front fan 124 and the rear fan 125 both have a plurality of air vent holes (ventilation windows) 107, 108, for introducing the outside air from the generator exterior into the generator interior and discharging the outside air from the generator interior to the generator exterior.

One axial end of the rotating shaft 123 (i.e., an end facing the front bracket 101) extends more outward in an axial direction of the rotating shaft than the bearing 103. A pulley 106 that is a belt disc is disposed at a front end of the section of the rotating shaft 123 that extends even more outward in the axial direction than the bearing 103. The pulley 106 is mechanically connected to a pulley of the internal combustion engine via a belt (not shown) that is a power-transmitting member. Rotational driving power of the internal combustion engine is thus transmitted to the pulley 106 via the belt. The rotor 120 is rotated by the belt-transmitted rotational driving power of the internal combustion engine.

The other axial end of the rotating shaft 123 (i.e., an end facing the rear bracket 102) extends more outward in the axial direction than the bearing 104. The section of the rotating shaft 123 that extends even more outward in the axial direction than the bearing 104 includes a pair of slip rings 124 on an outer surface. One pair of brushes 140 are in sliding contact with the pair of slip rings 124. Also, the field winding 122 is electrically connected to the pair of slip rings 124. One of the brushes 140 is electrically connected to the power generation controller 150 and is supplied with the field current controlled thereby. The field current that has been supplied to one of the brushes 140 is further supplied to the field winding 122 via one of the slip rings 124 and then returned via the other slip ring 124 and the other brush 140. The other brush 140 is electrically connected to a vehicle body ground of the automobile.

The paired brushes 140 are supported by respective holders 141 and elastically pressed against outer surfaces of the associated slip rings 124 so as to be in sliding contact therewith.

A rear cover 105 is disposed at one lateral side of the rear bracket 102 (i.e., at a rear lateral side opposite to the front bracket 101). The rear cover 105 adapted to form a storage compartment disposed therewith at a rear end of the generator body covers one lateral side of the rear bracket 102 so that a blocking space is formed at the lateral side thereof. The pair of slip rings 124, the brush holders 141, the pair of brushes 140 supported thereby, the rectifier 130, and the power generation controller 150 are stored within the storage compartment. The rear cover 105 has a plurality of air vent holes (ventilation windows) for introducing outside air from the generator exterior into the storage compartment.

A terminal 132 is electrically connected to a DC positive-polarity end of the rectifier 130. The terminal 132 is also electrically connected to positive-polarity ends of the spirally wound battery 200 and the electrical load 300. A DC negative-polarity end of the rectifier 130 is electrically connected to the vehicle body ground of the automobile as well as to negative-polarity ends of the spirally wound battery 200 and the electrical load 300.

The discharge current of the spirally wound battery 200 or the output current of the rectifier 130 is controlled by the power generation controller 150 and supplied to the field winding 122 via the brushes 140 and the slip rings 124. When the field current flows into the field winding 122 and magnetically energizes the field winding 122, the field winding 122 generates magnetic fluxes. Thus, one claw-shaped magnetic pole piece of the claw-shaped magnetic pole core 121a, 121b acts as the N-pole, and the other claw-shaped magnetic pole piece acts as the S-pole. The claw-shaped magnetic pole core 121a, 121b consequently forms a magnetic circuit in which the magnetic fluxes generated by the field winding 122 flow from the claw-shaped magnetic pole piece of the N-pole via a spatial gap to the stator core 111 and return therefrom via another spatial gap to the claw-shaped magnetic pole piece of the S-pole. After this, when the rotor 120 is rotated by the belt-transmitted rotational driving power of the internal combustion engine, the magnetic fluxes that have flowed to the stator core 111 are interlinked to the phase windings of each phase of the stator coil assembly 112. Accordingly, a voltage is induced into the stator coil assembly 112, resulting in three-phase AC power being generated. The three-phase AC power that has been generated by the stator coil assembly 112 is converted into DC power during full-wave rectification by the rectifier 130 and supplied to the spirally wound battery 200 and the electrical load 300 via the terminal 132. At this time, a current that is output from the terminal 132 is controlled by field current control of the power generation controller 15 so as to equal the set target output current.

The power generation controller 150 is constructed as a semiconductor integrated circuit (IC) with an integrated plurality of electronic circuit components such as semiconductor elements. Reference number 153 in Fig. 1 denotes an input port (input terminal), and 154 an output port (output terminal).

Field current control by the power generation controller 150 is preferred control that utilizes charge characteristics of the spirally wound battery 200 detailed below. A more specific method of the field current control by the power generation controller 15 will be described later herein.

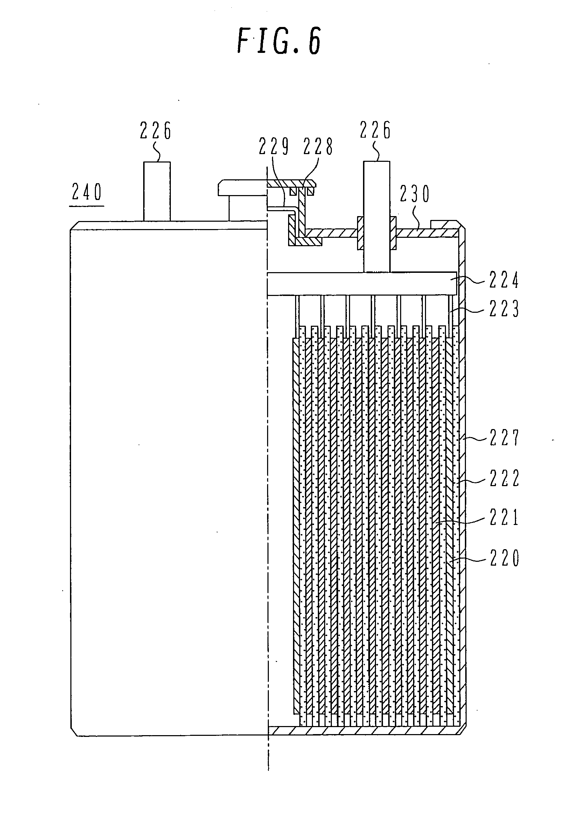

Next, a configuration of the spirally wound battery 200 in the present embodiment is described below using Figs. 6 to 9.

The spirally wound battery 200 is constructed using a plurality of electrically series-connected unit cells 240, depending on a power supply voltage. An independent structure of one unit cell 240 is shown in Fig. 6.

As shown in Fig. 6, the unit cell 240 includes an electrode plate group formed by winding layer-built negative electrode plates 220 and positive electrode plates 221 in a circular/spiral fashion via separators. The unit cell 240 is manufactured as follows:
Each negative electrode plate 220 and each positive electrode plate 221 are wound circularly/spirally with a 0.35-mm thick separator interposed therebetween. Next after being allowed to age for 16 hours under an atmosphere of 45°C in temperature and 93% in relative humidity, the two electrode plates are allowed to dry for one hour under an atmosphere of 110°C in temperature. After this, 10 electrode-plate lugs 223 of the same polarity are coupled to one another via a strap 224. This strapping operation is performed on both positive-polarity and negative-polarity sides. Next, the straps 224 of the negative-polarity and positive-polarity sides are welded onto a negative-polarity terminal 225 and a positive-polarity terminal 224, respectively, to fabricate a spirally wound group (electrode plate group).

Next, the spirally wound group is mounted in a cylindrical cell case 227 and after a lid 228 has been applied over the cell case 227 and then mounted together with the cell case 227 by, for example, welding, the cell case 227 is filled with a dilute sulfuric acid electrolyte of 1.2 in specific gravity (at 20°C) from a fluid-filling hole 229. A chemically unformed unit cell 240 is thus fabricated. Next after chemical formation of the unit cell 240 for 20 hours at 9 A, a dilute sulfuric acid solution with a specific gravity of 1.4 (at 20°C) is added to conduct conditioning for a sulfuric acid electrolyte having a concentration equivalent to a specific gravity of 1.3 (at 20°C). Finally, a safety valve 230 is mounted to obtain a cylindrical unit cell 240.

A chemically unformed negative electrode plate 220 is obtained by fabricating a negative-polarity current collector made of a foil of alloy which contains 2.2wt.% Sn in 0.2-mm thick Pb, then coating the surface and reverse of this current collector with 45 g of a paste which is a negative-polarity active material, and molding the current collector to a thickness of 0.8 mm.

The negative-polarity current collector here is a 0.25-mm thick, rolled sheet obtained by cold rolling after thermal manufacturing of the alloy which contains 2.2wt.% Sn in Pb.

The paste that is a negative-polarity active material is obtained as follows. That is to say, after 0.3wt.% lignin, 0.2wt.% barium sulfate or strontium sulfate, 0.1wt.% carbon powder, and 0.4wt.% lead-acid powder have been kneaded for about 10 minutes with a kneading machine to obtain a mixture, this mixture is kneaded by adding 12wt.% water and is further kneaded by adding a 13wt.% dilute sulfuric acid solution of 1.24 in specific gravity and 20°C in temperature to the kneaded lead-acid powder.

A chemically unformed positive electrode plate 221 is obtained by fabricating a positive-polarity current collector made of a foil of 0.25-mm thick Pb - 2.2wt.% Sn alloy, then coating the surface and reverse of this current collector with 45 g of a paste which is a positive-polarity active material, and molding the current collector to a thickness of 0.8 mm.

The positive-polarity current collector here is a 0.25-mm thick, rolled sheet obtained by cold rolling after thermal manufacturing of the alloy which contains 2.2wt.% Sn in Pb.

The paste that is a positive-polarity active material is obtained as follows in the same manner as that of the paste, a negative-polarity active material. That is to say, after 0.3wt.% lignin, 0.2wt.% barium sulfate or strontium sulfate, 0.1wt.% carbon powder, and 0.4wt.% lead-acid powder have been kneaded for about 10 minutes with a kneading machine to obtain a mixture, this mixture is kneaded by adding 12wt.% water and is further kneaded by adding a 13wt.% dilute sulfuric acid solution of 1.24 in specific gravity and 20°C in temperature to the kneaded lead-acid powder.

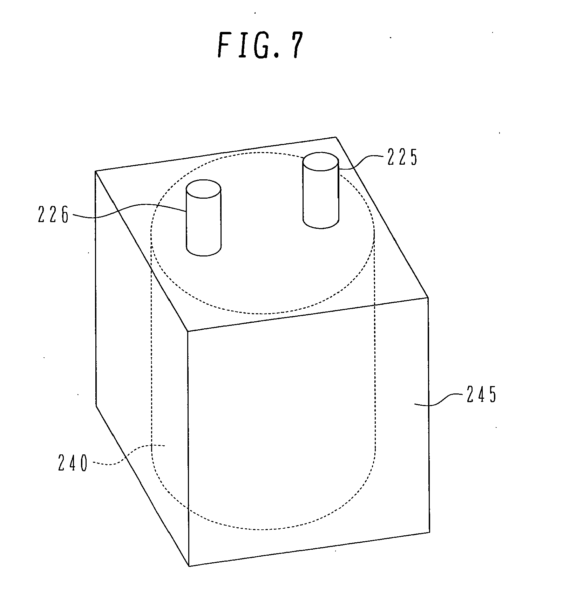

The cylindrical unit cell 240 is, as shown in Fig. 7, stored within a sheathing container 245 of a prismatic or rectangular (rectangular parallelepiped) shape. A positive-polarity terminal 226 and a negative-polarity terminal 225 protrude upward from an upper face of the sheathing container 245.

The unit cell 240 has its positive electrode plate 221 formed for a size equivalent to an area of 1,500-15,000 cm².

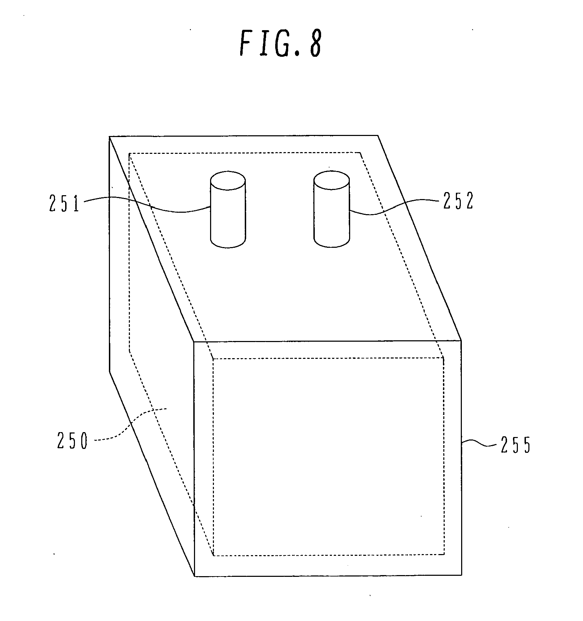

In Figs. 6 and 7, a description is given of an example in which the unit cell 240 is formed into a cylindrical shape and stored within the sheathing container 245 of a prismatic or rectangular (rectangular parallelepiped or cubic) shape. However, the shape of the unit cell and that of the sheathing container may be such as shown in Fig. 8.

The unit cell 250 shown in Fig. 8 is constructed by using a prismatic or rectangular (rectangular parallelepiped or cubic) cell case and winding a negative electrode plate and a positive electrode plate spirally into rectangular form, with a separator interposed between both electrode plates, in order that the spirally wound group (electrode plate group) matches the shape of the cell case. The thus-formed unit cell 250 is stored within a sheathing container 255 of a prismatic or rectangular (rectangular parallelepiped or cubic) shape. A positive-polarity terminal 251 and a negative-polarity terminal 252 protrude upward from an upper face of the sheathing container 255.

The unit cell 250 shown in Fig. 8, compared with the unit cell 240 shown in Fig. 7, is efficient since an unnecessary space between the unit cell and the sheathing container can be reduced.

The unit cell 250 is formed so that its positive electrode plate has an area of 1,500-15,000 cm².

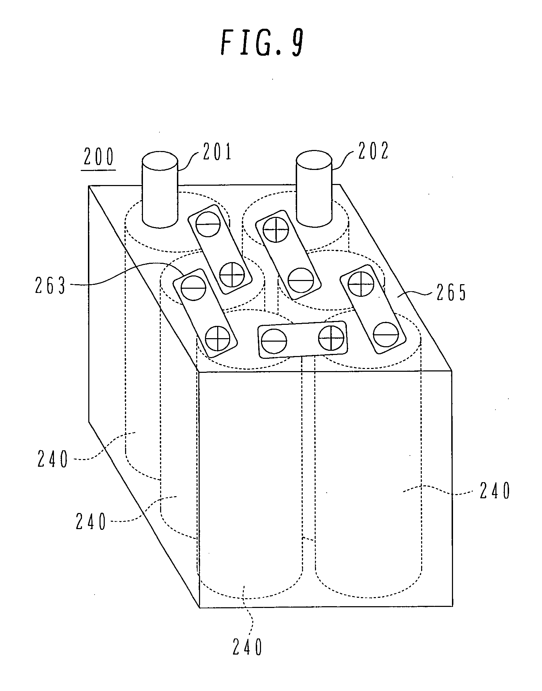

In addition, a plurality of unit cells 240 may be stored in one sheathing container 265, as shown in Fig. 9. In the present embodiment, a battery of the configuration shown in Fig. 9 is used as the spirally wound battery 200.

In terms of configuration, each unit cell 240 shown in Fig. 9 is the same as the unit cell 240 shown in Fig. 6. In Fig. 9, six unit cells 240 electrically connected in series via connection terminals 263 are stored within a prismatic or rectangular (rectangular parallelepiped) sheathing container 265. The sheathing container 265 is constructed so that a positive-polarity terminal 261 of the unit cell 240 electrically positioned at one end of the container 265, and a negative-polarity terminal 262 of the unit cell 240 electrically positioned at the other end of the container 265 protrude upward from an upper face thereof.

The thus-constructed spirally wound battery 200 has a design capacity of 24-34 Ah and an average discharge voltage of 12 V.

In addition, when estimated as those of a rectangular parallelepiped structure, maximum outline dimensions of the spirally wound battery shown in Fig. 9 are equivalent to a battery volume of 5.4 dm³ (this volume is the same as that of a model-38B19 layer-built lead-acid battery shown as a comparative example).

Each unit cell 240 is formed so that its positive electrode plate has an area of 1,500-15,000 cm².

In addition, when estimated as those of a rectangular parallelepiped structure, the maximum outline dimensions of the spirally wound battery shown in Fig. 9 are equivalent to a positive-polarity area of 1,700-17,000 cm²/dm³ per unit volume of the lead-acid battery.

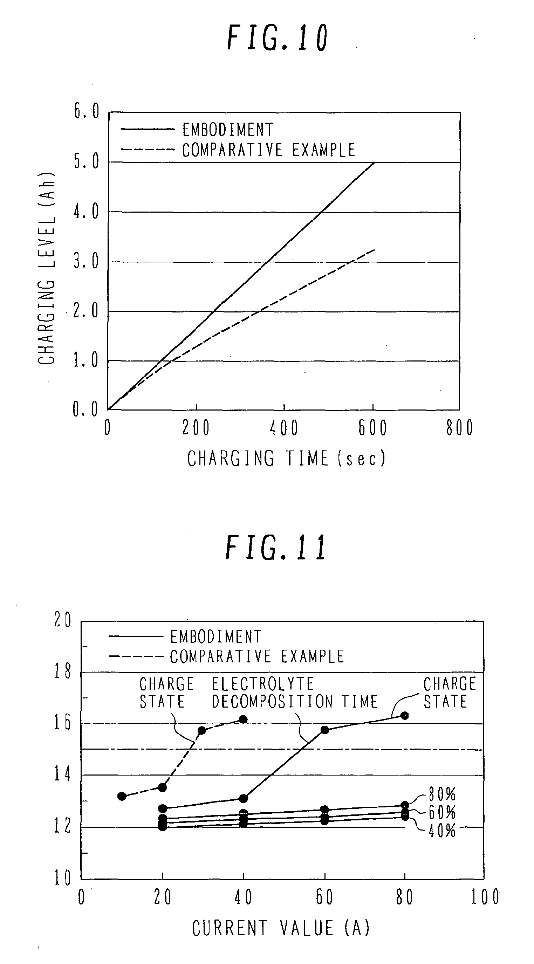

Next, comparisons in characteristics between the spirally wound battery 200 in the present embodiment and the lead-acid battery as the comparative example are shown using Figs. 10, 11, and 13, to describe performance of the spirally wound battery 200.

Fig. 10 shows as-charged battery acceptability test results on the above two batteries, based on provisions of relevant Japanese Industrial Standards. The provisions relate to battery testing under the conditions of 0°C in ambient temperature, 600 sec in current supply duration, and 50% in charge state, and specify that until the battery voltage reaches 14.4 V, the battery be charged at a constant current of 30 A, and that once the battery voltage reaches 14.4 V, the battery be recharged at a constant voltage of 14.4 V. In Fig. 10, the test results are shown using a relationship of a charging level (Ah) versus a charging time (sec). A solid line represents a characteristics curve of the spirally wound battery 200 used in the present embodiment, and a dotted line represents a characteristics curve of the lead-acid battery shown as the comparative example.

Fig. 11 shows 25°C constant-current test results on the above two batteries, based on provisions of relevant Japanese Industrial Standards. The provisions relate to battery charging at required constant currents under required charge states. In Fig. 11, the test results are shown using a relationship of a 'voltage at the first second of charging' versus a current value (A). In Fig. 11, characteristics during supply of constant currents of 20 A, 40 A, 60 A, and 80 A under charge states of 100%, 80%, 60%, and 40%, respectively, are shown for the spirally wound battery 200 used in the present embodiment. Characteristics during supply of constant currents of 10-40 A under a charge state of 100% are shown for the lead-acid battery shown as the comparative example.

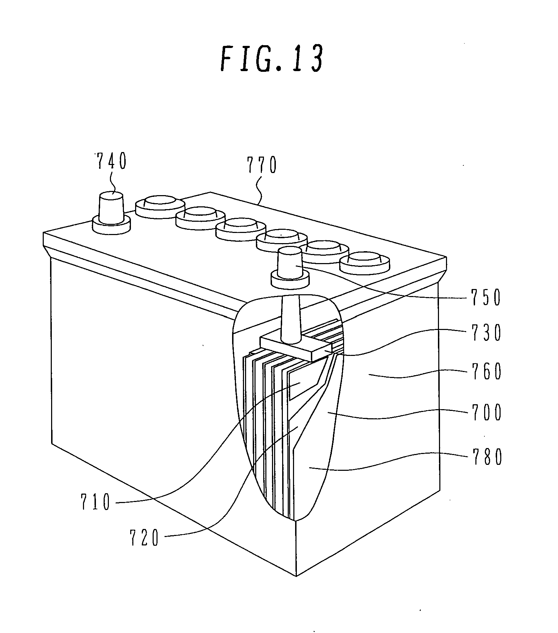

The lead-acid battery as the comparative example was constructed as shown in Fig. 13, and was manufactured as follows:
Five negative electrode plates 700 and four positive electrode plates 710 are each built in layers via a separator formed from 1.5-mm thick polyethylene, and the electrode plates of the same polarity are coupled together via a strap 730, whereby an electrode plate group 780 is fabricated. Additionally after six such electrode plate groups 780 have been connected in series and arranged in a battery case 760, the battery case 760 is filled with a dilute sulfuric acid electrolyte of 1.05 (20°C) in specific gravity to fabricate a chemically unformed battery. Next after chemical formation of this battery for 20 hours at 9 A, a dilute sulfuric acid solution with a specific gravity of 1.4 (at 20°C) is added to adjust a sulfuric acid electrolyte to obtain its concentration equivalent to a specific gravity of 1.3 (at 20°C). After that, a positive-polarity terminal 750 and a negative-polarity terminal 740 are each welded and then both enclosed with a lid 770 to obtain a layer-built battery.

Chemically unformed negative electrode plates 700 are each obtained as follows: a 1-mm thick negative-polarity current collector is filled with 45 g of a paste which is a negative-polarity active material, then after the current collector has been allowed to age for 16 hours under an atmosphere of 45°C in temperature and 93% in relative humidity, the current collector is allowed to dry for one hour at a temperature of 110°C, and molded to a thickness of 1.3 mm.

The negative-polarity current collector here is obtained by thermally manufacturing an alloy that contains 1.0wt.% Sn and 0.2wt.% Ca in Pb, then cold-rolling this alloy to form a rolled sheet, and expanding this sheet into the 1-mm thick negative-polarity current collector.

The paste that is a negative-polarity active material is obtained as follows. That is to say, after 0.3wt.% lignin, 0.2wt.% barium sulfate or strontium sulfate, 0.1wt.% carbon powder, and 0.4wt.% lead-acid powder have been kneaded for about 10 minutes with a kneading machine to obtain a mixture, this mixture is kneaded by adding 12wt.% water and is further kneaded by adding a 13wt.% dilute sulfuric acid solution of 1.24 in specific gravity and 20°C in temperature to the kneaded lead-acid powder.

Chemically unformed positive electrode plates 710 are each obtained as follows: a 1-mm thick positive-polarity current collector made of an alloy which contains 1.0wt.% Sn in Pb is filled with 45 g of a paste that is a positive-polarity active material, then after the current collector has been allowed to age for 16 hours under an atmosphere of 45°C in temperature and 93% in relative humidity, the current collector is allowed to dry for one hour at a temperature of 110°C, and molded to a thickness of 1.6 mm.

The positive-polarity current collector here is obtained by thermally manufacturing an alloy that contains 1.0wt.% Sn and 0.7wt.% Ca in Pb, then cold-rolling this alloy to form a rolled sheet, and expanding this sheet into the 1-mm thick positive-polarity current collector.

The paste that is a positive-polarity active material is obtained as follows. That is to say, after 0.3wt.% lignin, 0.2wt.% barium sulfate or strontium sulfate, 0.1wt.% carbon powder, and 0.4wt.% lead-acid powder have been kneaded for about 10 minutes with a kneading machine to obtain a mixture, this mixture is kneaded by adding 12wt.% water and is further kneaded by adding a 13wt.% dilute sulfuric acid solution of 1.24 in specific gravity and 20°C in temperature to the kneaded lead-acid powder.

The layer-built lead-acid battery 200 shown as the comparative example is of model 38B19 and has a battery volume of 5.4 dm³, a design capacity of 28 Ah, and an average discharge voltage of 12 V.

Also, the layer-built lead-acid battery 200 shown as the comparative example has an overall positive-electrode area of 5,400 cm², a positive-polarity area of 1,000 cm²/dm³ per unit volume of a rectangular cell, and a positive-polarity area of 900 cm² per unit cell.

As is evident from Fig. 10, the spirally wound battery characteristic curve of the present embodiment, denoted by a solid line, and the layer-built lead-acid battery characteristic curve of the comparative example, denoted by a dotted line, indicate that the spirally wound battery compares favorably with the layer-built lead-acid battery. That is to say, in terms of a charging level (capacity) obtained at the same elapsed time, for example, 600 sec, the spirally wound battery is 5.0 Ah, whereas the layer-built lead-acid battery is 3.1 Ah. The spirally wound battery in the present embodiment is therefore greater than the layer-built lead-acid battery in the comparative example in terms of the charging capacity at the same elapsed time. This is because internal resistance of the charging current of the spirally wound battery in the present embodiment is smaller than internal resistance of the charging current of the layer-built lead-acid battery in the comparative example, and because acceptability of the charging current of the former battery is greater than acceptability of the charging current of the latter battery. These characteristics mean that the spirally wound battery in the present embodiment can be charged more rapidly than the layer-built lead-acid battery in the comparative example. In addition, the solid line denoting the acceptability of the charging current of the spirally wound battery in the present embodiment increases in gradient as the charging current increases. This indicates that the charging time can be further shortened.

At the same time, as is obvious from Fig. 11, a characteristic curve associated with the spirally wound battery in the present embodiment, and a characteristic curve associated with the layer-built lead-acid battery in the comparative example indicate that the spirally wound battery in the present embodiment also compares favorably in the following terms. That is to say, under the same charge state, for example, a 100% (full charge), supplying a charging current of approximately 55 A to the spirally wound battery in the present embodiment causes the terminal voltage of the battery to exceed a voltage (say, 15 V) that was set up in accordance with the electrolyte decomposition voltage in the battery, whereas supplying a charging current of approximately 25 A to the layer-built lead-acid battery in the comparative example causes the terminal voltage of the battery to exceed the voltage set up in accordance with the electrolyte decomposition voltage in the battery. As can be seen from these facts, a larger charging current can be supplied to the spirally wound battery in the present embodiment than to the layer-built lead-acid battery in the comparative example. This means that the permissible charging current set up in accordance with the electrolyte decomposition voltage in the spirally wound battery of the present embodiment is larger than the permissible charging current set up in accordance with the electrolyte decomposition voltage in layer-built lead-acid battery of the comparative example. In addition, since lead-acid batteries are usually used under a charge state of about 80%, an even larger charging current can be supplied to the spirally wound battery of the present embodiment.

As described above, since a larger charging current can be supplied to the spirally wound battery in the present embodiment than to the layer-built lead-acid battery in the comparative example, the spirally wound battery can be charged more rapidly than the layer-built lead-acid battery. To utilize the charge characteristics of the spirally wound battery in the present embodiment, however, the charging current supply side, namely, the generator 100 in the present embodiment needs to be adapted to those charge characteristics. Accordingly, in the present embodiment, power generation by the generator 100 is controlled according to the particular charge characteristics of the spirally wound battery 200. This makes it possible, according to the present embodiment, to provide a high-performance, vehicle-mounted power supply system excellent in charge characteristics.

The spirally wound battery 200 in the present embodiment is also excellent in discharge characteristics, and even when a current of 100 A, for example, is supplied to operate, for example, the electrical load, the terminal voltage does not decrease below 12 V. This makes it possible, according to the present embodiment, to provide a high-performance, vehicle-mounted power supply system excellent in discharge characteristics.

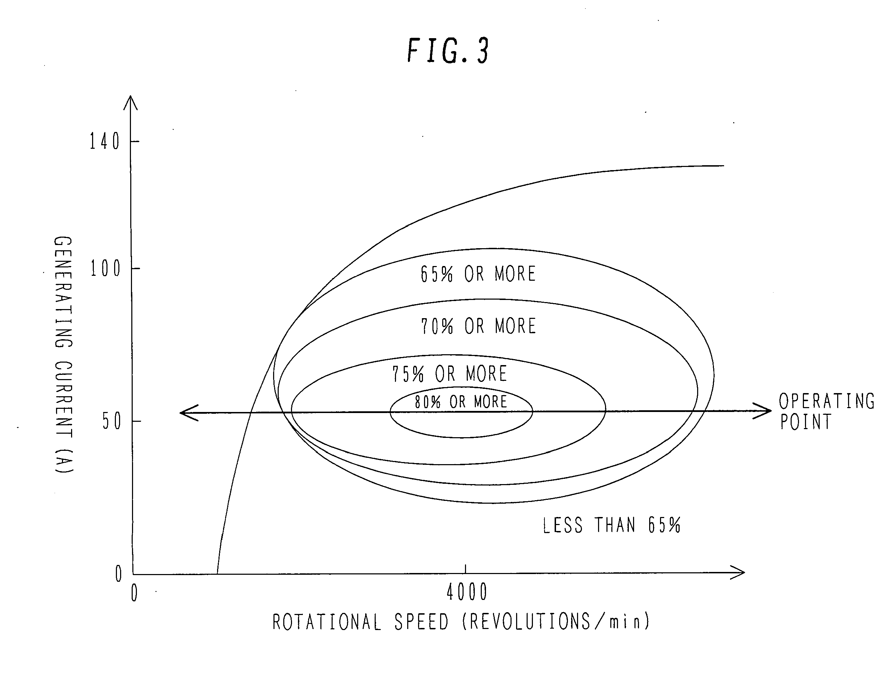

Generators that supply a charging current to an electrical energy storage device vary in specifications. The current generators used in automobiles have characteristics approximate to the efficiency characteristics obtained from the relationship between the number of revolutions and output current of the generator 100 in the present embodiment, the efficiency characteristics being shown in Fig. 3. Major specifications of the generator 100 in the present embodiment are shown below. That is to say, the generator 100 is 139 mm in body size (outside diameter of the stator 110) and 125 A in maximum output current. The stator core 111 has 36 slots, and the rotor 120 has 12 magnetic pole pieces. Also, the rotor 120 uses a Rundell-type structure and the stator coil assembly 112 uses round wire.

As is obvious from Fig. 3, the highest efficiency of 80% can be attained at an operating point of the generator 100 where the output current is 50 A and the generator speed is 4,000 (r/min), and high efficiency can be achieved when the output current is in a range of 30%-50% of the maximum output current and the generator speed ranges from 2,000 to 6,000 r/min. Accordingly, when the output current is set to be any value falling within the range of 30%-50% of the maximum output current, that is, when the output current is set to be 50 A, for example, an associated operating point of the generator 100 always lies in high-efficiency region, even if the number of revolutions of the generator 100 is changed in the range of 2,000-6,000 r/min by changes in engine speed. Also, as can be seen from Fig. 11, the output current of the generator 100 that is in the range of 30%-50% of the maximum output current is within the permissible charging current of the spirally wound battery 200.

In the present embodiment, therefore, on the basis of the efficiency characteristics in Fig. 3, the target output current of the generator 100 is set to stay in the range of 30%-50% of its maximum output current, and the field current supplied to the field winding 122 is controlled to ensure that the output current of the generator 100 always matches the set target output current.

The generator speed of 4,000 r/min, when expressed in terms of engine speed with a pulley ratio of 2.5, is equivalent to 1,600 r/min, which is one of the highest engine speeds most frequently used under normal driving conditions of the vehicle.

In the generator that charges the layer-built lead-acid battery in the comparative example, power generation is controlled by field current control to obtain a constant terminal voltage (e.g., 14.3 V) for the layer-built lead-acid battery. Therefore, since an operating point thereof changes significantly with a change in engine speed and with a magnitude of an electrical load, the operating point exists distributedly in both high and low power-generation regions shown in Fig. 3. Accordingly, the operating point, unlike that of the present embodiment, cannot always exist in a high power-generation region.

When a current involving one hour to discharge or charge the spirally wound battery 200 (i.e., the one-hour rate current) is expressed using discharge coefficient C, the output current of the generator 100 that is 30%-50% of its maximum output current is equivalent to a current from 1C to 2C. This current is larger than the charging current (less than 1C) at which the layer-built lead-acid battery in the comparative example is charged at a constant voltage.

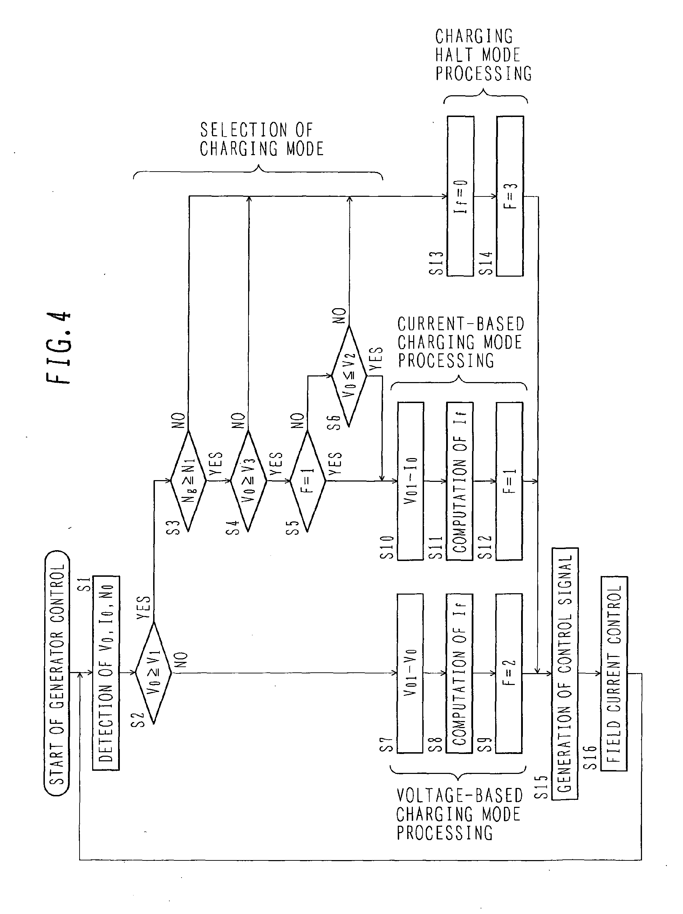

Next, control operation of the power generation controller 150 in the present embodiment is described below using Fig. 4.

The power generation controller 150 in the present embodiment has three charging modes, namely, a current charge mode, a voltage charge mode, and a charge stopping mode, and the electronic circuit 151 is composed so as to control the field current by selecting one of the three modes. That is to say, the electronic circuit 151 includes: a charge mode selection processor that selects a charging mode; a voltage charge mode processor for computing or setting the field current according to a mode selected by the processor, the field current being computed from the previously set target output current and the terminal voltage of the spirally wound battery 200 (i.e., the voltage developed at the output side of the generator 100); a charge stopping mode processor for setting the field current to be 0 (zero); a control signal generator that uses the computed or set field current to generate the control signal for controlling the driving of the switching element 152, and output the control signal to the gate electrode of the switching element 152; and a detector that detects the terminal voltage of the spirally wound battery 200 (i.e., the output voltage of the generator 100), the output current of the spirally wound battery 200 (i.e., current that is output from the generator 100), and the number of revolutions of the generator 100.

The electronic circuit 151 controls the field current supplied to the field winding 122.

The power generation controller 150 usually charges the spirally wound battery 200 in the current charge mode which utilizes the charge characteristics of the battery 200. The power generation controller 150 changes the current charge mode to the voltage charge mode if the terminal voltage of the spirally wound battery 200 is reduced below a minimum permissible starting voltage in the current charge mode by an increase in the electrical load 300. The power generation controller 150 changes the current charge mode to the charge stopping mode if the terminal voltage of the spirally wound battery 200 reaches a permissible stopping voltage for the current charge mode during the charging process in the current charge mode or if high-speed operation of the engine causes the number of revolutions of the generator body to reach a permissible stopping number of revolutions in the current charge mode and increases the terminal voltage of the spirally wound battery 200 above the minimum permissible starting voltage in the current charge mode.

As shown in Fig. 4, power generation control includes a charge mode selection process, a voltage charge mode process, a current charge mode process, a charge halt process, and a field current control process. The field current control process includes control signal generation.

As shown in Fig. 1, voltage information on the output positive-polarity side of the rectifier 130, output information on the current detector 160, and voltage information on the phase winding of one phase of the stator coil assembly 112 are input to the power generation controller 150 (electronic circuit 151). On the basis of the input information, the power generation controller 150 (electronic circuit 151) executes step S1 to detect the output voltage Vo of the rectifier 130 (the terminal voltage of the spirally wound battery 200), the output current Io of the rectifier 130 (the terminal current of the spirally wound battery 200), and the number of revolutions, Ng, of the generator 100. After that, the power generation controller 150 (electronic circuit 151) executes the charge mode selection process (steps S2 to S6).

In the charge mode selection process, it is first judged in step S2 whether the output voltage Vo of the rectifier 130 reaches a minimum starting voltage V1 in the current charge mode. If the judgment results in S2 are negative, processing advances to the voltage charge mode process (steps S7 to S9). If the judgment results are positive, processing advances to step S3 to judge whether the number of revolutions, Ng, of the generator 100 is less than the stopping number of revolutions in the current charge mode. If the judgment results in S3 are negative, processing advances to the charge stopping mode process (steps S13 and S14). If the judgment results are positive, processing advances to step S4 to judge whether the output voltage Vo of the rectifier 130 reaches a stopping voltage V3 of the current charge mode. If the judgment results in S4 are positive, processing advances to the charge stopping mode process. If the judgment results are negative, processing advances to step S5 to judge whether the charging mode in an immediately previous process is the current charge mode, that is, whether '1' is set in a charging mode flag F. If the judgment results in S5 are positive, processing advances to the current charge mode process (steps S10 to S12). If the judgment results in step S5 are negative, processing advances to step S6 to judge whether the output voltage Vo of the rectifier 130 reaches a maximum starting voltage V2 of the current charge mode. If the judgment results in S4 are negative, the charge stopping mode process is executed, or if the judgment results are positive, the current charge mode process is executed.

In the present embodiment, whether the number of revolutions, Ng, of the generator 100 is less than the stopping number of revolutions, N1, in the current charge mode, is judged in step S3 of Fig. 4. This is because, depending on a particular number of revolutions of the generator 100, an actual operating point thereof may exist in a low-efficiency region of Fig. 3. That is to say, when the charging mode is the current charge mode, the terminal voltage of the spirally wound battery 200 is in a somewhat high state. In this state, if, for reasons such as high-speed operation, the engine speed increases above 1,500 r/min, for example, the generator 100 increases in core loss and windage loss in proportion to the second to fourth power of the engine speed. Accordingly, even if the target output current from the rectifier 130 is set to equal 50 A, for example, the actual operating point of the generator 100 exists in a low-efficiency region. In the present embodiment, therefore, the appropriate charging mode is selected according to the particular number of revolutions, Ng, of the generator 100.

In the charge mode selection process, if the voltage charge mode process including steps S7 to S9 is selected, the power generation controller 150 (electronic circuit 151) first executes step S7 to compute a differential voltage between the previously set target output voltage Vol of the rectifier 130 (the current charge mode minimum starting voltage V1) and the detected output voltage Vo of the rectifier 130 (detected terminal voltage of the spirally wound battery 200). Next in step S8, the power generation controller 150 (electronic circuit 151) uses the above-computed differential voltage value to compute the field current to be supplied to the field winding 122, and then in step S9, sets '2' for the charging mode flag F to indicate that the voltage charge mode has been selected.

In the charge mode selection process, if the current charge mode process including steps S10 to S12 is selected, the power generation controller 150 (electronic circuit 151) first executes step S10 to compute a differential current between the previously set target output current Io1 of the rectifier 130 and the output current Io of the rectifier 130 (the detected terminal voltage of the spirally wound battery 200). Next in step S11, the power generation controller 150 (electronic circuit 151) uses the above-computed differential current value to compute the field current to be supplied to the field winding 122, and then in step S12, sets '1' for the charging mode flag F to indicate that the current charge mode has been selected.

In the charge mode selection process, if the charge mode stopping process including steps S13 and S14 is selected, the power generation controller 150 (electronic circuit 151) first executes step S13 to set 0 (zero) as the field current to be supplied to the field winding 122. Next in step S14, the power generation controller 150 (electronic circuit 151) sets '3' for the charge mode flag F to indicate that the charge stopping mode has been selected. Power generation by the generator 100 is thus stopped.

The power generation controller 150 (electronic circuit 151) has several maps (tables). These include, for example, a map (table) that shows a relationship between the above-described differential voltage and the field current, a map (table) that shows a relationship between the above-described differential current and the field current, and a map (table) that shows a relationship between the output voltage and output current at a particular number of revolutions of the generator 100. The power generation controller 150 (electronic circuit 151) can therefore use the above maps (tables) to compute the field current corresponding to the above differential voltage or the above differential current.

After the field current has been computed or set and the charge mode flag F has been set, the power generation controller 150 (electronic circuit 151) executes step S15 to use the computed or set field current value and correspondingly generate the control signal for controlling the driving of the switching element 152 (i.e., varying a duty, or current conduction ratio, of the control signal). Next, the power generation controller 150 (electronic circuit 151) executes step S16 to use the above control signal and correspondingly control a switching action of the switching element 152 (control element) and thus control the field current to be supplied to the field winding 122. Thus, power generation by the generator 100 is controlled and an output appropriate for the particular charging mode (i.e., a current of 50 A, for example, for the current charge mode) is supplied from the generator 100 to the spirally wound battery 200.

The target voltage settings that are the current charge mode stopping voltage V3, current charge mode starting minimum voltage V1, and current charge mode starting maximum voltage V2, based on the electrolyte decomposition voltage in the spirally wound battery 200, are each assigned a tolerance.

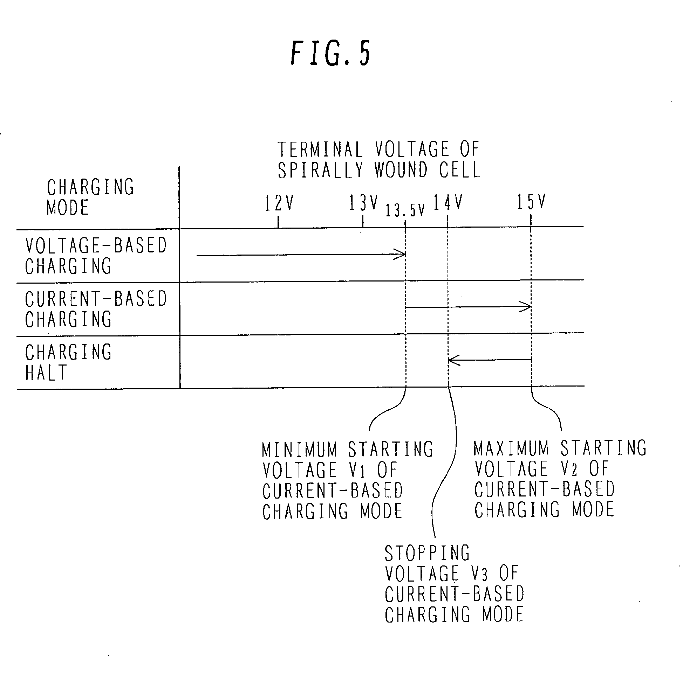

Next, selection of a charging mode by the control operation of the power generation controller 150 in the present embodiment, and the charge states of the spirally wound battery 200 are described below using Fig. 5. Specific data is shown in the description, but the data is only an example.

First, assume that the terminal voltage of the spirally wound battery 200 is less than 13.5 V (the current charge mode starting minimum voltage V1). In this case, since the spirally wound battery 200 is electrically undercharged, the power generation controller 150 changes the charging mode to the voltage charge mode and controls the power generation of the generator 100 so that the terminal voltage of the spirally wound battery 200 reaches 13.5 V (the current charge mode starting minimum voltage V1). In other words, in order to output a constant voltage of 13.5 V as a target output voltage from the rectifier 130, the power generation controller 150 conducts field current control based on that target output voltage and on the terminal voltage of the spirally wound battery 200. At this time, if the electrical load 300 is sufficiently small (output power from the generator 100 > power consumption in the electrical load 300), the terminal voltage of the spirally wound battery 200 increases to 13.5 V after a certain time has passed.

Once the terminal voltage of the spirally wound battery 200 reaches 13.5 V, the power generation controller 150 changes the charging mode to the current charge mode and controls the power generation of the generator 100 so that the terminal voltage of the spirally wound battery 200 reaches 15 V (the current charge mode stopping voltage V3). In other words, in order to output a constant voltage of 15 V as a target output voltage from the rectifier 130, the power generation controller 150 conducts field current control based on that target output voltage and on the terminal voltage of the spirally wound battery 200. At this time, if the electrical load 300 is sufficiently small (output power from the generator 100 > power consumption in the electrical load 300), the terminal voltage of the spirally wound battery 200 increases to 15 V after a certain time has passed. Conversely, if the electrical load 300 is too large (output power from the generator 100 < power consumption in the electrical load 300), the terminal voltage of the spirally wound battery 200 decreases below 13.5 V after a certain time has passed. In such a case, since the discharge of the spirally wound battery 200 continues, the charging mode is returned to the voltage charge mode.

Once the terminal voltage of the spirally wound battery 200 reaches 15 V, since further charging results in overcharging, the power generation controller 150 changes the charging mode to the charge stopping mode to prevent overcharging, and controls the field current so as to stop the power generation of the generator 100. After this, if the terminal voltage of the spirally wound battery 200 is reduced to a target terminal voltage V4 (current charge mode starting maximum voltage V2) by the power consumption in the electrical load 300, the power generation controller 150 returns the charging mode to the current charge mode. As in the foregoing case, until the terminal voltage of the spirally wound battery 200 reaches the terminal target voltage 15 V (the current charge mode stopping voltage V3), in order to output a constant current of 50 A as a target output current from the rectifier 130, the power generation controller 150 conducts field current control based on that output current and on the terminal current of the spirally wound battery 200. Power generation by the generator 100 is controlled in this manner.

According to the present embodiment described above, since the power generation control of the generator 100 can be conducted appropriately for the spirally wound battery 200, improvement of the battery 200 in charge/discharge characteristics can be utilized and vehicle-mounted power supply system performance can be improved. According to the present embodiment, therefore, even if the electrical load 300 on the power supply is increased by electrical driving of vehicle-mounted auxiliary devices, output improvement thereof, and/or other factors, the increase in the electrical load 300 can be accommodated without enhancing a voltage of the vehicle-mounted power supply system.

According to the present invention, since the appropriate power generation control can be conducted for the spirally wound battery 200, it is also possible to operate the generator 100 in a highly efficient range and reduce the load of the generator 100 upon the engine which is the driving source of the generator 100. According to the present invention, therefore, it is possible to contribute to improvement of automobile fuel consumption by engine fuel consumption reduction and to improvement of the global environment by engine emissions reduction.

The present embodiment has been described using an example of setting target output currents based on the efficiency characteristics of Fig. 3 previously. Within the range where the operating point of the generator 100 is present in an efficient operating region, however, the target output currents may be set up appropriately each time according to the particular operational states of the generator 100, electrical load 300, engine, and the like, and the particular state of the spirally wound battery 200.

### [Second Embodiment]

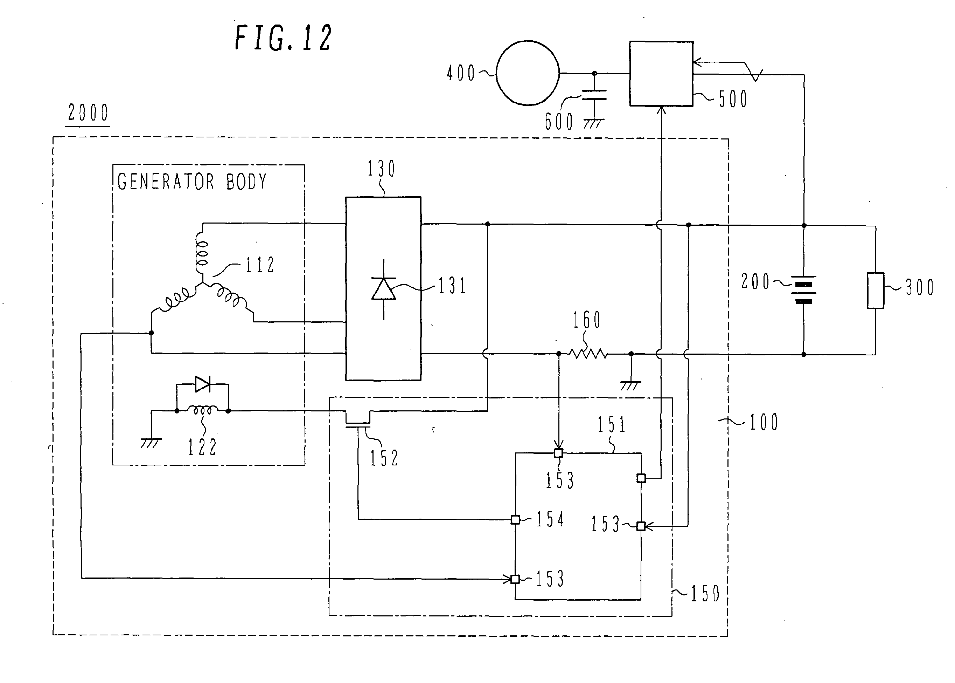

A second embodiment of the present invention is described below using Fig. 12.

A vehicle-mounted power supply system 2000 of the present embodiment is such that the vehicle-mounted power supply system 1000 described as the first embodiment, is mounted in an automobile with a mounted electric power-generating device 400, and such that electric power generated in the electric power-generating device 400 can be supplied to the spirally wound battery 200 and the electrical load 300.

The electric power-generating device 400 is a generator for regenerative use. The generator for regenerative use refers to a DC generator mechanically connected to an axle of a wheel of the automobile, the DC generator being adapted to receive rotational force of the wheel and convert the rotational (kinetic) energy into electrical energy (DC power) during regenerative control for purposes such as braking the automobile, decelerating the automobile, and driving on downslopes.

The present embodiment is described taking an example in which a generator for regenerative power generation is mounted as the electric power-generating device 400. A motor generator (alternator) for mounting in hybrid automobiles or the like, or a solar cell, a wind generator, a generator that uses engine-released heat, or the like may be used as the electric power-generating device 400.

The electric power-generating device 400 has an electrically connected electric power converter 500 at its output end. The power converter 500 is a step-up/step-down direct-current (DC) - direct-current DC converter that converts input DC power into required DC power by voltage stepping-up or stepping-down. The power converter 500 includes an electric power conversion circuit (switching semiconductor element-based circuit) that is electrically connected to the spirally wound battery 200 and the electrical load 300, and a controller that controls operation (switching of the switching semiconductor element) of the electric power conversion circuit.

A capacitor 600 is electrically connected in parallel between the electric power-generating device 400 and the electric power converter 500. The capacitor 600 is an electrical energy storage element constructed to temporarily store DC power that has been output from the electric power-generating device 400, and supply the stored DC power to the power converter 500. During regenerative power generation, the power-generating device 400 must instantly transform kinetic energy into electrical energy. Accordingly, the present embodiment has the capacitor 600 electrically connected to an input end of the power converter 500.

If the power-generating device 400 has a voltage-regulating function, the power converter 500 and the capacitor 600 can be made unnecessary.

In the thus-constructed vehicle-mounted power supply system 2000 of the present embodiment, electric power is generated in the power-generating device 400 and when the electric power can be supplied to the spirally wound battery 200 and the electrical load 300, supply of power from the generator 100 is switched over to that of the power-generating device 400. In this case, power that has been converted by the electric power converter 500 is supplied to the spirally wound battery 200 and the electrical load 300.

The electric power converter 500 supplies power to the spirally wound battery 200 so as to utilize the charge characteristics thereof. That is to say, the power converter 500, after receiving output information from the electrical load 300 and a current detector (shunt resistor, current transformer, a current sensor using a magnetic sensor, or the like) that is provided at an output end of the electrical load 300, uses the above output information to detect the output current supplied to the spirally wound battery 200 (the terminal current of the battery 200). In addition, the power converter 500 receives an input terminal voltage of the spirally wound battery 200 from the power generation controller 150 of the generator 100, and similarly to the control operation of the power generation controller 150, described in the first embodiment, selects a charging mode, and supplies power to the spirally wound battery 200 according to the selected charging mode.

In the current charge mode, until an output voltage of the power converter 500 reaches a target terminal voltage (current charge mode stopping voltage), operation of the power conversion circuit is controlled by the controller so that an output current from the power converter 500 matches a set target output current. In the voltage charge mode, until the output voltage of the power converter 500 reaches a target terminal voltage (current charge mode minimum voltage), the operation of the power conversion circuit is controlled by the controller so that the output voltage of the power converter 500 matches a set target output voltage. In the charge stopping mode, the operation of the power conversion circuit is stopped, in which case, the electric power generated by the power-generating device 400 is consumed as heat.

Since the power-generating device 400 requires essentially no consideration in terms of efficiency and other factors, the power-generating device 400 can supply a high current to the spirally wound battery 200, compared with the generator 100.

According to the present embodiment described above, it is possible to effectively recover, for example, regenerative energy that has been traditionally consumed as heat, and hence to reduce the operation of the generator 100, so the load thereof upon the engine which is the driving source of the generator 100 can be further reduced. The present invention, therefore, yields operational effects in that it can further contribute to the improvement of automobile fuel consumption by engine fuel consumption reduction and to the improvement of the global environment by engine emissions reduction.

The above mentioned features and embodiments may be combined in any way, partly or as a whole.

## Claims

1. A vehicle-mounted power supply system (1000) mounted in a vehicle in order to supply electric power to a vehicle-mounted electrical load, the system comprising:
an electrical energy storage device electrically connected to said vehicle-mounted electrical load (300) to store electric power and supply the stored power to said vehicle-mounted electrical load (300); and
an electric generator (100) electrically connected to said electrical energy storage device and said vehicle-mounted electrical load (300) to generate electric power and supply the generated power to said electrical energy storage device and said vehicle-mounted electrical load (300);
wherein:
said electrical energy storage device is constructed using a lead-acid battery (200) in which a spirally wound electrode plate group including a separator interposed between a positive electrode plate (221) and a negative electrode plate (220) is immersed in an electrolyte; and
said electric generator includes
a generator body with a field winding (122), and
a power generation controller (150) for controlling electric power generation of said generator body by controlling a field current supplied to said field winding (122); and
wherein said power generation controller (150) is constructed to:
receive input information on a terminal voltage and terminal current of said electrical energy storage device; and
until the terminal voltage reaches a first target voltage, control the field current such that the terminal current matches a set target current.

2. The vehicle-mounted power supply system according to claim 1, wherein:
said power generation controller (150) controls the field current such that once the terminal voltage reaches the first target voltage, power generation by said generator body is stopped.

3. The vehicle-mounted power supply system according to claim 1 or 2, wherein:
said power generation controller (150) is constructed to:
receive input information on the number of revolutions of said generator body; and
control the field current such that once the number of revolutions of said generator body reaches a required number of revolutions, power generation by said generator body is stopped.

4. The vehicle-mounted power supply system according to at least one of claims 1 to 3, wherein:
if the terminal voltage decreases below a second target voltage smaller than the first target voltage, said power generation controller (150) controls the field current in accordance with the terminal voltage and the second target voltage such that the terminal voltage reaches the second target voltage.

5. The vehicle-mounted power supply system according to at least one of claims 1 to 4, wherein:
the first target voltage is set on the basis of an electrolyte decomposition voltage in said lead-acid battery (200).

6. The vehicle-mounted power supply system according to at least one of claims 1 to 5, wherein:
the target current is set on the basis of efficiency characteristics of said generator body that are obtained from a relationship between the number of revolutions of said generator body and an output current thereof.

7. A vehicle-mounted power supply system mounted in a vehicle with an electric power-generating device in order to supply electric power to a vehicle-mounted electrical load (300), the system comprising:
an electrical energy storage device electrically connected to said vehicle-mounted electrical load (300) to store electric power and supply the stored power to said vehicle-mounted electrical load (300);
a generator (100) electrically connected to said electrical energy storage device and said vehicle-mounted electrical load (300) to generate electric power and supply the generated power to said electrical energy storage device and said vehicle-mounted electrical load (300); and
an electric power converter (500) for varying power output from said electric power-generating device;
wherein:
said electrical energy storage device is constructed using a lead-acid battery (200) in which a spirally wound electrode plate group including a separator interposed between a positive electrode plate (221) and a negative electrode plate (220) is immersed in an electrolyte; and
said electric generator (100) includes
a generator body with a field winding (122), and
a power generation controller (150) that controls electric power generation of said generator body by controlling a field current supplied to said field winding (122); and
wherein said power generation controller (150) is constructed to:
receive input information on a terminal voltage and terminal current of said electrical energy storage device; and
until the terminal voltage reaches a first target voltage, control the field current such that the terminal current matches a set target current.

8. The vehicle-mounted power supply system according to claim 7, wherein:
when there is power that has been generated in said electric power-generating device, a supply mode of power is changed from supply of power by said generator (100) to supply of power by said electric power-generating device, then the output power therefrom is converted by said electric power converter (500), and the resulting power is supplied to said electrical energy storage device and said vehicle-mounted electrical load (300).

9. A vehicle-mounted generator (100) mounted in a vehicle such that said generator (100), when driven by an internal combustion engine which is a driving source of said vehicle, generates electric power and supplies the generated power to a vehicle-mounted electrical load (300) and to a lead-acid battery (200) in which a spirally wound electrode plate group including a separator interposed between a positive electrode plate (221) and a negative electrode plate (220) is immersed in an electrolyte, said generator (100) comprising:
a generator body that includes a rotor (120) equipped with a field winding (122), and a stator (110) for generating alternating-current power by magnetically acting with said rotor (120);
a rectifier (130) that rectifies into direct-current power the alternating-current power which is output from said stator (110);
a current sensor provided at an output side of said rectifier (130); and
a power generation controller (150) that controls the generation of the alternating-current power by controlling a field current supplied to said field winding (122);
wherein:
said power generation controller (150) is constructed to:
detect a voltage developed at the output side of said rectifier (130), and detect, in accordance with an output signal of said current sensor, a current that is output from said rectifier (130); and
until the voltage at the output side of said rectifier (130) reaches a first target voltage, control the field current such that the output current from said rectifier (130) matches a set target current.

10. The vehicle-mounted generator according to claim 9, wherein:
said power generation controller (150) controls the field current such that once the output voltage of said rectifier (130) reaches the first target voltage, the generation of the alternating-current power by said generator body is stopped.

11. The vehicle-mounted generator according to claim 9 or 10, wherein:
said power generation controller (150) is constructed to:
detect the number of revolutions of said generator body; and
control the field current such that once the number of revolutions of said generator body reaches a required number of revolutions, the generation of the alternating-current power by said generator body is stopped.

12. The vehicle-mounted generator according to at least one of claims 9 to 11, wherein:
if the output voltage of said rectifier (130) decreases below a second target voltage smaller than the first target voltage, said power generation controller (150) controls the field current in accordance with the output voltage of said rectifier (130) and the second target voltage such that the output voltage of said rectifier (130) reaches the second target voltage.

13. The vehicle-mounted generator according to at least one of claims 9 to 12, wherein:
the first target voltage is set on the basis of an electrolyte decomposition voltage in said lead-acid battery (200).

14. The vehicle-mounted generator according to at least one of claims 9 to 13, wherein:
the target current is set on the basis of efficiency characteristics of said generator body that are obtained from a relationship between the number of revolutions of said generator body and the output current from said rectifier (130).

15. A controller for a vehicle-mounted generator which controls a field current supplied to a field winding (122) of said vehicle-mounted generator (100), and hence controls the generation of power within said vehicle-mounted generator (100) which generates, when driven by an internal combustion engine, electric power and supplies the generated power to a vehicle-mounted electrical load (300) and to a lead-acid battery (200) in which a spirally wound electrode plate group including a separator interposed between a positive electrode plate (221) and a negative electrode plate (220) is immersed in an electrolyte, and that, the controller comprising:
an electronic circuit (151) which, until a voltage developed at an output side of said generator (100) reaches a first target voltage, executes a process for controlling the field current such that an output current from said generator (100) matches a set target current;
an input section that acquires information on the output voltage of said generator (100) and on the output current thereof, into said electronic circuit (151); and
an output section that outputs a control signal from said electronic circuit (151) to a controller which controls the field current.

16. The controller for a vehicle-mounted generator according to claim 15, wherein:
once the voltage at the output side of said generator (100) reaches the first target voltage, said electronic circuit (151) executes a process for stopping the generation of power within said generator (100), and outputs a control signal generated on the basis of the process, to said controller via said output section.

17. The controller for a vehicle-mounted generator according to claim 15 or 16, wherein:
said electronic circuit (151) is constructed to
acquire information on the number of revolutions of said generator (100), via said input section, and
once the number of revolutions reaches a required number of revolutions, execute a process for stopping the generation of power within said generator (100), and output a control signal generated on the basis of the process, to said controller via said output section.

18. The controller for a vehicle-mounted generator according to at least one of claims 15 to 17, wherein:
if the voltage at the output side of said generator (100) decreases below the first target voltage, said electronic circuit (151) executes, in accordance with the output voltage of said generator (100) and the second target voltage, a process for causing the output voltage of said generator (100) to reach the second target voltage, and outputs a control signal generated on the basis of the process, to said controller via said output section.

19. The controller for a vehicle-mounted generator according to at least one of claims 15 to 18, wherein:
the first target voltage is set on the basis of an electrolyte decomposition voltage in said lead-acid battery (200).

20. The controller for a vehicle-mounted generator according to at least one of claims 15 to 19, wherein:
the target current is set on the basis of efficiency characteristics of said generator (100) that are obtained from a relationship between the number of revolutions of said generator body and the output current thereof.
